(19) Europäisches Patentamt

European Patent Office

Office européen des brevets

(11) **EP 1 726 354 A1**

(12) **EUROPEAN PATENT APPLICATION**
published in accordance with Art. 158(3) EPC

(43) Date of publication:
**29.11.2006 Bulletin 2006/48**

(51) Int Cl.:
**B01D 71/02** (2006.01)   **B01D 53/22** (2006.01)
**C04B 35/10** (2006.01)   **C04B 38/00** (2006.01)
**C04B 41/85** (2006.01)

(21) Application number: **05720771.4**

(22) Date of filing: **15.03.2005**

(86) International application number:
**PCT/JP2005/004514**

(87) International publication number:
**WO 2005/087356 (22.09.2005 Gazette 2005/38)**

(84) Designated Contracting States:
**AT BE BG CH CY CZ DE DK EE ES FI FR GB GR HU IE IS IT LI LT LU MC NL PL PT RO SE SI SK TR**

(30) Priority: **17.03.2004 JP 2004076027**
**17.03.2004 JP 2004076059**

(71) Applicant: **Bussan Nanotech Research Institute Inc.**
**Tokyo 100-0004 (JP)**

(72) Inventor: **AIZAWA, M.; c/o Bussan Nanotech Research Inst. Inc**
**Tokyo 1000004 (JP)**

(74) Representative: **HOFFMANN EITLE**
**Patent- und Rechtsanwälte**
**Arabellastrasse 4**
**81925 München (DE)**

(54) **SEPARATION MEMBRANE**

(57)    [Subject] The aim is to provide a separation membrane which can fulfill both high separation capability and high permeation rate.

[Solving Means] The disclosed is separation membrane which comprises a porous substrate which is made of ceramic sintered body of which a main ingredient is alumina, and a zeolite membrane which is formed over the surface of the porous substrate, wherein the porous substrate comprises a base layer and a foundation layer which is formed on the base layer and is formed for the zeolite membrane, and the separation membrane is **characterized in that** a mean pore diameter of the foundation layer is smaller than a mean pore diameter of the base layer.

[Fig. 1]

## Description

## Technical Field

This invention relates to a separation membrane, particularly, to a separation membrane which can fulfill not only high separation factor but also high permeation rate.

## Background Arts

Zeolites are crystalline aluminosilicates which embrace pores of the order of molecular sizes, and membranes made up of zeolites are widely used as molecular sieves because of their property of selectively allowing molecules to pass through themselves depending on the molecular size or shape. Particularly, their use as membranes for separating water from organic solvents or the likes has attracted considerable attention these days. Zeolite membranes, which function as separation membranes, do not have sufficient mechanical strength in themselves, and therefore they are usually used in form of supporting with a porous support which is made of ceramics, etc.

As a typical method of manufacturing zeolite membrane on a porous substrate, a method has been developed wherein a porous support is immersed in a raw material that contain a silica source and an alumina source as main ingredients, and under such a condition zeolite membrane is synthesized by hydrothermal reaction so as to attach the membrane onto the surface of the porous support. Once a porous support is immersed in slurry of the raw material that contains the silica source and the alumina source and this reaction system is brought to an appropriate temperature condition, zeolite is grown with the aid of fine zeolite seed crystals, as nuclei, in the slurry so as to form a membrane.

The method of manufacturing zeolite membrane wherein the zeolite membrane is formed by hydrothermal reaction under the condition that zeolite seed crystals are carried on the porous substrate, per se, is known (For instance, see JP-HEI7(1995)-185275 A).

However, in this hydrothermal reaction process, when a porous substrate is immersed in a slurry supersaturated with a zeolite raw material, not only fine zeolite seed crystals are attached to the surface of the porous substrate to cause the growth of a zeolite membrane, but, large zeolite crystals which have been hugely grown in the slurry are also attached to the surface of the porous support and from where the zeolite membrane are also grown. The zeolite membrane thus formed is not uniform in pore size and thickness, and it gives rise to a problem of being apt to have pinholes. Thus, when intending to synthesize a zeolite membrane on a porous substrate by hydrothermal reaction, it is proposed that the zeolite seed crystals are carried on the porous substrate of ceramics, etc., in advance, and the concentration of the zeolite raw material in the slurry should be set to a low level.

Patent Literature 1: JP-HEI7 (1995) -185275 A (the 8th paragraph to the 18th paragraph)

## Disclosure of the Invention

## Problems to be solved by the Invention

With respect to such a separation membrane, it is found that the diameter of pores in the porous substrate acts as an important parameter after our, the inventors' investigation. According to our investigation, when the pore diameter is larger than a prescribed level, the obtained membrane is likely to have pinholes because the pores of the substrate does not facilitate their plugging with the zeolite crystals, and thus the separation capability of the obtained separation membrane becomes low. On the other hand, when the pore diameter is smaller than a prescribed level, the obtained membrane is likely to have a low permeation rate because the pores of the support substrate is so small as to enlarge the permeation resistance, although the pinhole occurrences are repressed.

This invention is contrived in consideration of such circumstances, and an object of the present invention is, therefore, to provide a separation membrane which can fulfill both high separation capability and high permeation rate.

## Means for Solving the Problems

The separation membrane according to the present invention, which aims to solve the above mentioned problems, comprises a porous substrate which is made of ceramic sintered body of which a main ingredient is alumina, and a zeolite membrane which is formed over the surface of the porous substrate, wherein the porous substrate comprises a base layer and a foundation layer which is formed on the base layer and is formed for the zeolite membrane, and the separation membrane is characterized in that a mean pore diameter of the foundation layer is smaller than a mean pore diameter of the base layer.

According to the above mentioned separation membrane, since the zeolite membrane is formed on the condition that it is in contact with the foundation layer, a dense and thin zeolite membrane is obtained while repressing the pinhole occurrences. Further, since the base layer to which the zeolite membrane is not contacted has pores of which mean diameter is larger than that of the foundation layer, a high gas permeation rate can be attained in the base layer. Therefore, it is possible to obtain a separation membrane which can fulfill both high separation factor and high permeation rate. Meanwhile, when, between the base layer and the foundation layer, one or more layers which have pores of a different mean diameter from those of the above two layer are present, the separation membrane having such a construction would be considered as an equivalent of this invention, and it can perform the same functions and effects with this invention.

In the separation membrane according to the present invention, it is preferable that the nitrogen gas permeation rate through the porous substrate is in the range of 200 - 7000 $m^3/(m^2 \cdot hr \cdot atm)$. More desirably, the nitrogen gas permeation rate through the porous substrate is in the range of 400 - 7000 $m^3/(m^2 \cdot hr \cdot atm)$.

With the separation membrane which fulfills the above condition, since the porous substrate shows a nitrogen gas permeation rate of not less than 200 $m^3/(m^2 \cdot hr \cdot atm)$, it is possible to ensure a sufficient gas permeability. Therefore, when the membrane is used for separating water from alcohol in a large amount, it is possible to heighten the water permeation rate sufficiently so as to ensure an adequate separation capability. Incidentally, when the nitrogen gas permeation rate through the porous substrate is set to be more than 7000 $m^3/(m^2 \cdot hr \cdot atm)$, it is necessitated to change parameters which determine the characteristics of the porous substrate, for instances, to increase the porosity of porous substrate, or to make the mean pore diameter larger. If the porosity is increased, it will be hardly possible to secure the mechanical strength of the porous substrate. If the mean pore diameter is enlarged, a fear of the occurrence of pinholes will arise on the zeolite membrane preparation as mentioned later, which is followed by a failure of giving the intended separation performance as the separation membrane. Thus, the nitrogen gas permeation rate is regulated to be in the range of 200 - 7000 $m^3/(m^2 \cdot hr \cdot atm)$. When the nitrogen gas permeation rate is set to not less than 400 $m^3/(m^2 \cdot hr \cdot atm)$, it will be expected that the more desirable separation capability.

In the separation membrane according to the present invention, it is possible to use as the porous substrate a multi-layer structured one. Further, the porous substrate according to the present invention may have two or more of layers which have a mutually varied mean pore diameter.

In the separation membrane according to the present invention, the porous substrate may have a base layer and a foundation layer which is formed on the base layer and which is for the zeolite membrane, wherein the mean pore diameter of the base layer is in the range of 4 - 12 $\mu$m, and the mean pore diameter of the foundation layer is in the range of 0.4 - 1.2 $\mu$m.

With the separation membrane which fulfills the above condition, since the mean pore diameter of the base layer is large so as to be in the range of 4 - 12 $\mu$m, it is possible to have high gas permeability. The purpose of assuming the diameter to be not more than 12 $\mu$m is to prevent the pinhole being occurred in the foundation layer. To prevent the pinhole being occurred in the foundation layer is important for preventing the pinhole being occurred in the zeolite membrane formed on the surface of the foundation layer. When the mean pore diameter of the foundation layer is small so as to be in the range of 0.4 - 1.2 $\mu$m, the zeolite membrane can be formed as a thinner one. As a result, an extremely high separation capability as compared with that of the conventional separation membrane can be attained.

In the separation membrane according to the present invention, it is preferable that the thickness of the base layer is in the range of 1 - 3 mm, and the thickness of the foundation layer is in the range of 10 - 200 $\mu$m. When the thickness of the base layer is larger than necessary, the nitrogen gas permeation rate mentioned above is hardly attained, and thus the permeation coefficient of the separation membrane becomes unduly low. When the thickness of the base layer is smaller than necessary, the mechanical strength becomes unduly low. Therefore, as the thickness of the base layer, the range of 1 - 3 mm is preferable. When the thickness of the foundation layer is larger than necessary, the nitrogen gas permeation rate mentioned above is hardly attained, and thus the permeation coefficient of the separation membrane becomes unduly low. When the thickness of the foundation layer is smaller than necessary, pinholes of a large diameter will appear in the foundation layer, which is followed by the appearance of pinholes in the zeolite membrane. Thus, the separation factor of the separation membrane becomes unduly low. Therefore, as the thickness of the foundation layer, the range of 10 - 200 $\mu$m is preferable.

In the separation membrane according to the present invention, it is preferable that the aspect ratio of the particles which compose the foundation layer is not less than 1.05. When satisfying this condition, the separation capability can be enhanced.

In the separation membrane according to the present invention, it is more preferable that the aspect ratio of the particles which compose the foundation layer is not less than 1.2. When satisfying this condition, the separation capability can be more enhanced.

In the separation membrane according to the present invention, it is preferable that the porosity of the porous substrate is in the range of 20 - 50%.

In the separation membrane according to the present invention, it is more preferable that the porosity of the porous substrate is in the range of 35 - 40%.

In the separation membrane according to the present invention, it is preferable that the porous substrate has a maximum pore diameter of not more than 9 $\mu$m, wherein the maximum pore diameter is determined by the bubble point method using water. When satisfying this condition, the separation capability can be enhanced. The bubble point method is the method which is performed by absorbing a certain liquid into the pores with the aid of capillary action, subjecting the pores to pressure of an appropriate gas from one side, calculating the diameter from pressure and surface tension which are measured when bubbles are continuously generated from the other side of a maximum pore. Details are described below.

In the separation membrane according to the present invention, it is more preferable that the porous substrate has a maximum pore diameter of not more than 7 μm, wherein the maximum pore diameter is determined by the bubble point method using water. To control the maximum pore diameter is very important for preventing the pinhole being occurred in the zeolite membrane formed on the surface of the foundation layer, and for obtaining a high separation capability.

In the separation membrane according to the present invention, a total content of Ca and K included in the porous substrate is preferably, not more than 0.8 mol%, and more preferably, not more than 0.5 mol% When the contents of Ca and K are lessened by defining the total content of Ca and K included in the porous substrate as it is not more than 0.8 mol%, and more preferably, not more than 0.5 mol%, it is possible to repress the weakening of the porous substrate's strength when the hydrothermal reaction is performed to the porous substrate using a strongly alkaline hydrothermal reaction solution, the weakening being caused by dissolution of Ca and K from the porous substrate to the hydrothermal reaction solution. Thus, an efficient mechanical strength of the membrane in use can be ensured so that the membrane well functions as separation membrane.

**Effects of the Invention**

As described above, according to the present invention, it is possible to provide a separation membrane which can fulfill both high separation capability and high permeation rate.

**Embodiments for Carrying Out the Invention**

Now, the embodiments of the present invention will be described with reference to the drawings as follows.

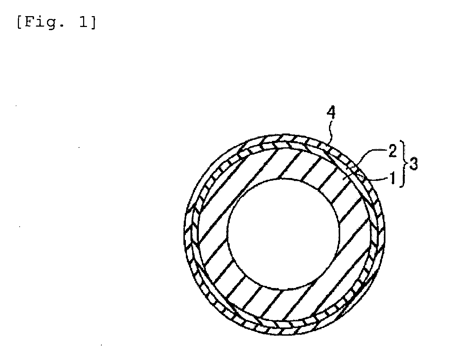

Fig. 1 is a sectional view of one embodiment of separation membrane according to the present invention.

The separation membrane includes a porous substrate 3 which is made of ceramic sintered body of which a main ingredient is alumina. The porous substrate 3 includes a primer tube 1 as an embodiment of the base layer, and a foundation layer 2 which is formed on the primer tube 1. It is preferable that the mean diameter of pores in the primer tube 1 is in the range of 4 - 12 μm, and the mean diameter of pores in the foundation layer 2 is in the range of 0.4 - 1.2 μm. Further, it is preferable that the thickness of the primer tube is in the range of 1 - 3 mm, and the thickness of the foundation layer is in the range of 10 - 200 μm. Onto the surface of the porous substrate 3, a zeolite membrane 4 is formed. It is preferable that the total content of Ca and K included in the porous substrate 3 is in the range of not more than 0.8 mol%, and more desirably, not more than 0.5 mol%.

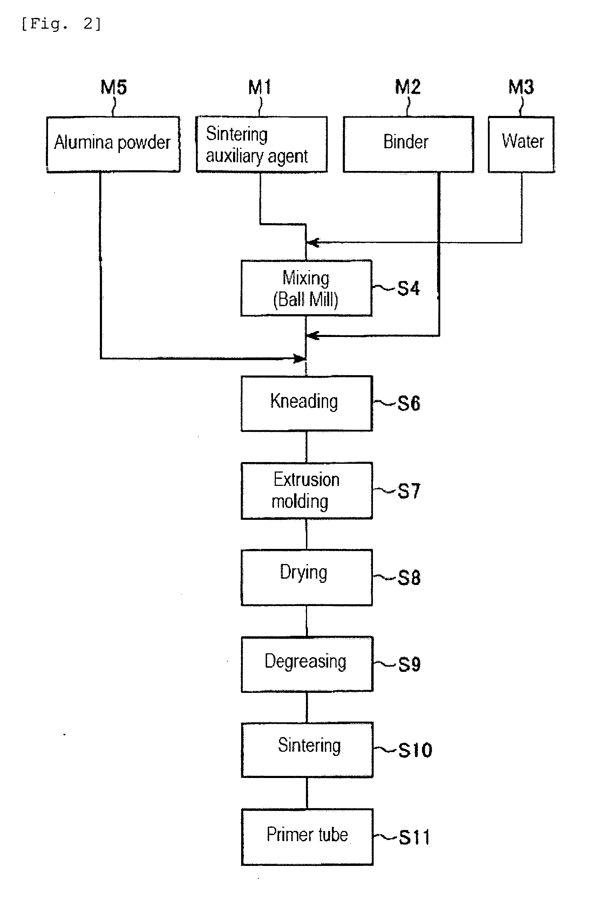

Fig. 2 is a flow chart of illustrating a procedure for manufacturing the primer tube as an embodiment of the base layer in the separation membrane. At first, sintering auxiliary powder M1 (for example, CaO, $CaCO_3$, or HfO, etc.) and water M3 as shown in the upper row of Fig.2 are mixed using a ball mill (S4).

Next, binder M2 (for example, methyl cellulose type binder, etc.) and high purity alumina powder M5 (for example, alumina powder having a purity of not less than 90%) are provided. These binder and alumina powder are added to the previously prepared mixture as mentioned above, and kneaded together (S6). Incidentally, the binder M2 is used at an amount in the range of 5 - 20 % by volume.

Then, the resultant kneaded mixture is subjected to extrusion molding in order to mold a primer tube 1 (S7), and which is followed by drying the primer tube 1 (S8), degreasing the dried primer tube (S9). The primer tube 1 is then sintered (S10). The sintered condition is set as being under the ambient air atmosphere, at a temperature in the range of 1150 - 1800 °C, and with a sintering time in the range of 1 - 4 hours. As described above, the primer tube 1 made of ceramic sintered body of which the main ingredient is alumina is prepared (S11).

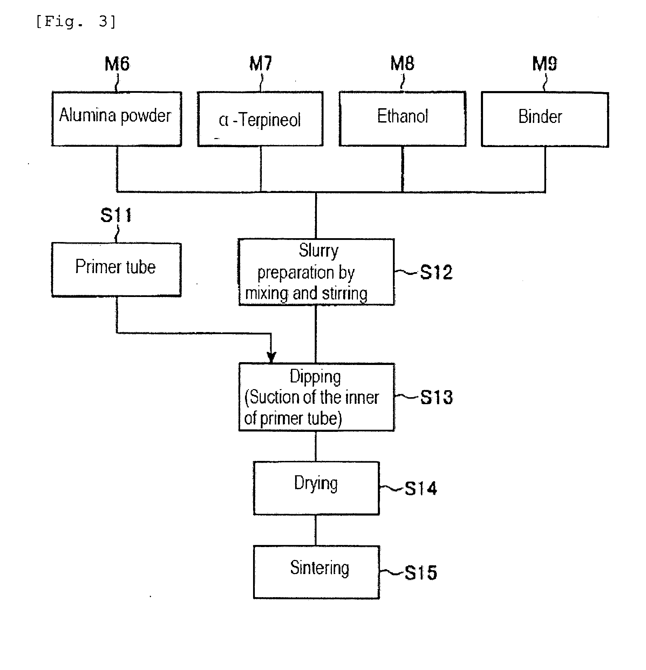

Next, the procedure for forming the foundation layer on the outer surface of the primer tube will be described with reference to Fig. 3.

As shown in Fig. 3, high purity alumina powder M6, α-terpineol M7, ethanol M8, and ethyl cellulose type binder M9 in a weight ratio of 30:75:25:4 are blended and stirred in order to prepare slurry (S12).

Into the obtained slurry, the primer tube is dipped (S13). In order to avoid the inner surface of the primer tube contacting with the slurry on the dipping, it is possible that an opening end of the primer tube 1 is blocked while the other opening end of the primer tube 1 is sucked. Alternatively, it is possible that the primer tube 1 is simply dipped. In addition, to apply pressure to the slurry is also able to replace these methods mentioned above.

Then, the primer tube is dried (S14), and sintered (S15). The sintered condition is set as being under the ambient air atmosphere, at a temperature in the range of 1100 - 150.0 °C, and with a sintering time in the range of 1 - 4 hours. As described above, the tubular porous substrate 3 is prepared by forming a foundation layer 2 onto the outer surface of the primer tube 1 as shown in Fig.1. Incidentally, a main ingredient of the foundation layer is ceramic sintered body of alumina.

Although in this embodiment the porous substrate which includes alumina as main ingredient, it is also possible to use any of porous substrates made of other kinds of material (ceramics, organic polymeric materials, or metals). For instance, as the other kinds of ceramics, mullite, silica, titania, zirconia, and so on are preferable. As the metal, stainless steel, sintered nickel, sintered nickel-iron mixture, and so on are preferable.

As the porous substrate 3, it is desirable to have a maximum pore diameter of not more than 9 μm, more preferably, not more than 7 μm, the maximum pore diameter being determined by the bubble point method using water.

The bubble point method is the method which is performed by absorbing a certain liquid into the pores with the aid of capillary action, subjecting the pores to pressure of an appropriate gas from one side, and calculating the diameter from pressure and surface tension which are measured when bubbles are continuously generated from the other side of a maximum pore, by using the following equation.

$$r = -2 \gamma \cos\theta / P$$

wherein $\gamma$ denotes surface tension of liquid, $\theta$ denotes contacting angle of membrane with liquid, P denotes pressure (bubble point), and r denotes pore diameter of membrane.

Incidentally, the bubble point method is a method for determining the maximum pore diameter of the porous material in accordance with the ASTM (American Society for Testing Materials) standard (F316-86), and it is excellent in repeatability.

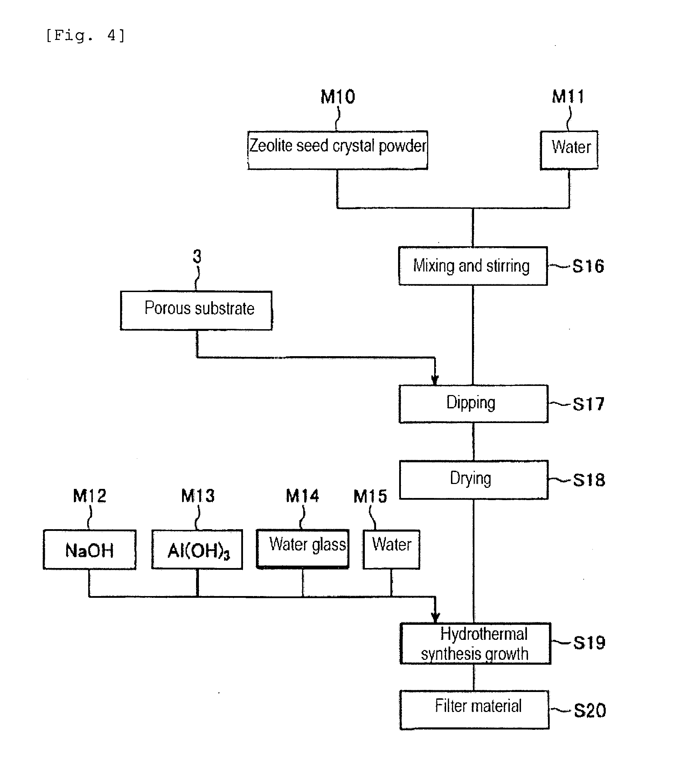

Next, the procedure of forming the zeolite membrane onto the surface of the foundation layer will be described with reference to Fig. 4.

[1] Attachment of seed crystals to the porous substrate

In advance of the zeolite synthesizing reaction, zeolite seed crystals are attached to the foundation layer 2. It is preferable that the relationship between the mean diameter dsm of the zeolite seed crystals and the mean pore diameter dtm of the foundation layer can satisfy a requirement of $1/3 \leq dtm/dsn \leq 10$, more desirably, $1 \leq dtm/dsn \leq 4$. For instance, assuming that the mean diameter dsm of the zeolite seed crystals is 0.3 $\mu$m while the mean pore diameter dtm of the foundation layer is 0.6 $\mu$m, dtm/dsn = 2 and which satisfies the above requirement. The reason why to satisfy the above requirement is preferable is that the thickness of zeolite membrane 4 which is finally formed is decided by the relationship between the mean pore diameter dtm of the foundation layer 2 and the mean diameter dsm of the zeolite seed crystals. When dtm/dsm is smaller than 1/3, the zeolite membrane can not be formed as being amply continued and crystallized one. Meanwhile, when dtm/dsm is greater than 10, the attachment of zeolite seed crystals to the foundation layer increases to an excessive level, and as a result of this, for instance, cracking will occur in the seed crystals on the drying step after dipping, and which is followed by a deterioration in the separation capability of the separation membrane after the zeolite membrane formation.

(1) Seed crystal

Minute particles of zeolite (powder of zeolite seed crystals M10) are added and mixed to water, then they are stirred together in order to prepare a slurry (S16). It is preferable that the mean diameter dsm of the zeolite minute particles (seed crystals) is, for example, 0.3 $\mu$m, and the concentration of the seed crystals in the slurry is, for example, 0.5 % by weight.

(2) Porous substrate

When one which has a zeolite membrane formed on the porous substrate is utilized as a molecular sieve, etc., it is preferable that the mean pore diameter of the porous substrate, etc., satisfy the conditions that (a) the porous substrate can support the zeolite membrane firmly, (b)the pressure loss is lowered as possible, and (c) the porous substrate has an adequate self-supporting property (mechanical strength). Concretely, the mean pore diameter of the primer tube (base layer) 1 in the porous substrate is desirably in the range of 4 - 12 $\mu$m, and more desirably in the range of 6 - 8 $\mu$m. The thickness of the primer tube 1 is desirably in the range of 1 - 3 mm, and more desirably, approximately 1 mm. As the mean pore diameter of the foundation layer 2, it is desirable to be in the range of 0.4 to 1.2 $\mu$m, and more particularly, in the range of 0.5 to 0.9 $\mu$m. As the thickness of the foundation layer 2, it is desirable to be in the range of 100 - 200 $\mu$m, and more particularly, approximately 50 $\mu$m. Further, as the porosity of the porous substrate, it is desirable to be in the range of 20 - 50 %, and more particularly, in the range of 35 - 40 %.

The shape of the porous substrate is not particularly limited to anyone, and various shapes such as tubular, flat plate, honeycomb, porous fiber, pellet, etc., are applicable. For example, in the case of tubular shape, although the size of the porous substrate is not particularly limited, but in practical, the length thereof may be in the range of about 2 - 200 cm, the inner diameter thereof may be in the range of 0.5 - 2 cm, and the thickness thereof may be 0.5 to 4 mm.

(3) Attachment of seed crystals

The porous substrate 3 is dipped into the slurry including the zeolite seed crystals (S17). The method of attaching the slurry to the porous substrate can be appropriately selected from among dip coating method, spray coating method, other coating methods and filtration method, depending on the shape of the porous tubular support. The time for which the porous tubular support is in contact with the slurry is preferably 0.5 to 60 minutes, and more preferably 1 to 10 minutes.

After attaching the seed crystals, preferably the porous tubular support is dried (S18). However, drying at a high temperature is not preferable, because the solvent rapidly evaporates at such a high temperature, thereby the agglomeration of seed crystal grains is increased, which might destroy the uniform adhesion of the seed crystals. Thus, preferably drying is performed at a temperature of not more than 70°C. In order to shorten the heating time, preferably the heat-drying is combined with drying at room temperature. The drying time is not particularly limited, as long as the porous tubular support can be fully dried, however, it is usually about 2 to 24 hours.

[2] Synthetic reaction of zeolite

The synthesis of the zeolite membrane onto the porous substrate can be progressed by hydrothermal synthetic method or vapor phase method. Hereinafter, the synthetic process of the zeolite membrane will be illustrated by taking the hydrothermal synthetic method as an example. The present invention, however, does not limited thereto.

Raw materials

Raw materials M12 - M15 for the hydrothermal reaction is added to water and then stirred in order to prepare a reaction solution or slurry using for zeolite synthetic reaction.
The raw materials include an alumina source or silica source, and optionally, an alkaline metal source and/or an alkaline earth metal source. As the alumina source, aluminum salts such as aluminum hydroxide, sodium aluminate, aluminum sulfate, aluminum nitrate and aluminum chloride; aluminum powder; and colloidal aluminum may be exemplified. As the silica sources, alkaline metal silicates such as sodium silicate, water glass and potassium silicate; silica powder; silicic acid; colloidal silica; and silicon alkoxides (e.g. aluminum isopropoxide) may be exemplified. As the alkaline (earth) metal sources, sodium chloride, potassium chloride, calcium chloride and magnesium chloride may be exemplified. Alkaline metal silicates serve both as a silica source and an alkaline metal source.

The mole ratio of silica source to alumina source (in terms of $SiO_2/Al_2O_3$) depends on the composition of the intended zeolite.

Into the reaction solution or slurry, a crystallization promoting agent may be added. As the crystallization promoting agent, tetrapropyl ammonium bromide, tetrabutyl ammonium bromide may be cited.

(2) Heat treatment

The seed crystals attached porous substrate 3 is brought into contact with the reaction solution or slurry (for instance, dipping to the reaction solution or slurry), and then heat treatment is applied (S19). With respect to the heating temperature, a temperature within the range of 40 - 200 °C, more particularly, 80 - 150 °C, is desirable. When the temperature is less than 40 °C, the synthetic reaction of the zeolite would be proceeded insufficiently. When the temperature is more than 200 °C, it is hardly possible to control the synthetic reaction of the zeolite, and thus it is impossible to obtain a uniform zeolite membrane. Although the time for the heating may be appropriately varied in accordance with the heating temperature, in general, it may be in the range of 1 - 100 hours. Autoclave heating may be adaptable when an aqueous reaction solution or slurry is maintained to a temperature exceeding 100 °C.

[3] Zeolite membrane

In accordance with the above mentioned procedure, zeolite membrane 4 can be formed on the foundation layer 2 as shown in Fig. 1, and thus, the separation membrane can be manufactured (S20). Incidentally, in the process for manufacturing the membrane with the hydrothermal synthesis, zeolite crystalline of which the zeolite membrane is comprised is formed not only on the surface of the foundation layer 2, but also on the interior of pores of the foundation layer 2. According to the present invention, it is possible to produce as the zeolite membrane various compositions and constitutions, such as MFI type, X type, Y type, A type, T type, and so on. These zeolite membranes can be used as the separation membrane.
When the zeolite membrane is used as the separation membrane, the performance thereof can be represented with the permission rate of permeated substance and separation factor. The term "separation factor" herein used means, for example, in the separation of water and ethanol, the factor expressed by the following equation (1),

$$\alpha \;=\; (B_1/B_2)\,/\,(A_1/A_2) \quad \cdots \quad (1)$$

wherein $A_1$ represents the concentration % by weight of water before separation, $A_2$ the concentration % by weight of ethanol, $B_1$ the concentration % by weight of water in the liquid or gas having permeated through the membrane, and $B_2$ the concentration % by weight of ethanol. The larger the separation factor $\alpha$, the better performance is obtained in the separation membrane.

Although in the above mentioned embodiment the porous substrate which comprises two-layered constitution of the base layer and the foundation layer is used, a three- or more layered porous substrate would be also applicable.

According to the above mentioned embodiment, onto the surface of the primer tube (base layer) 1 of which mean pore diameter is in the range of 4 - 12 $\mu$m, the foundation layer 2 of which mean pore diameter is in the range of 0.4 - 1.2 $\mu$m is formed, and then onto the surface of the foundation layer 2 the zeolite membrane 4 is formed. While the zeolite membrane can be manufactured as a thin form, the gas permeability can be enhanced because the mean pore diameter of base layer is set to be large, and the occurrence of the pinhole can be also repressed because the mean pore diameter of the foundation layer is set to be small. Therefore, it is possible to realize an extremely high separation performance as compared with that of the conventional separation membranes.

It would be understood that the present invention is not limited to above mentioned embodiments, and, without deviating from the spirit of the present invention, various variations and modifications can be made on carrying out the present invention.

Examples

(Example 1)

First, sintering auxiliary agent powder which consists of MgO and $CaCO_3$, and water were mixed together using a ball mill. Then, high purity alumina powder and methyl cellulose type binder were provided in order to knead them with the mixture obtained above.

Next, the resultant kneaded mixture was subjected to extrusion molding in order to mold a primer tube, and which was followed by drying the primer tube and degreasing the dried primer tube. The primer tube was then sintered. As described above, the primer tube made of ceramic sintered body of which the main ingredient is alumina was prepared. Incidentally, it was found that the mean pore diameter of the base layer was 7 $\mu$m, and the porosity was 40%.

Next, a foundation layer was formed on the outer surface of the primer tube.

High purity alumina powder, $\alpha$-terpineol, ethanol, and ethyl cellulose type binder were blended in a weight ratio of 30:75:25:4 and stirred in order to prepare slurry. Into the obtained slurry, the aforementioned primer tube was dipped in order to attach the slurry on the outer surface of the primer tube. Then, the primer tube was dried, and sintered in order to form a foundation layer onto the outer surface of the primer tube. As described above, the porous substrate which comprised the primer tube which was provided with a foundation layer on the outer surface thereof was prepared. Incidentally, it was found that the mean pore diameter of the foundation layer was 0.8 $\mu$m, the thickness of the foundation layer was 30 $\mu$m, and the nitrogen gas permeation rate was 900 $m^3/(m^2 \cdot hr \cdot atm)$.

Minute particles of zeolite (diameter: 300 nm) were added and mixed to water, then they were stirred together in order to prepare a slurry having a concentration of 0.5 % by weight. To this slurry the aforementioned porous substrate made of $\alpha$-alumina (outer diameter: 10 mm, inner diameter: 6mm, length: 13 cm) was dipped for 3 minutes, and then it was pulled up from the slurry at a rate of about 0.2 cm/sec. The dipped porous substrate was then dried for 2 hours in a temperature controlled bath of 23 °C, and for 16 hours in another temperature controlled bath of 40 °C.

Hydrothermal reaction solution of pH 13 was prepared by mixing sodium silicate, aluminum hydroxide and distilled water so that the mole ratios of respective ingredients satisfied the conditions of $SiO_2/Al_2O$ = 2, $Na_2O/SiO_2$ =1, and $H_2O/Na_2O$ = 75. The seed crystals attached porous substrate was dipped into this reaction solution and maintained therein for five hours at 100 °C. As a result, a zeolite membrane was formed on the surface of the porous substrate (the surface of the foundation layer).

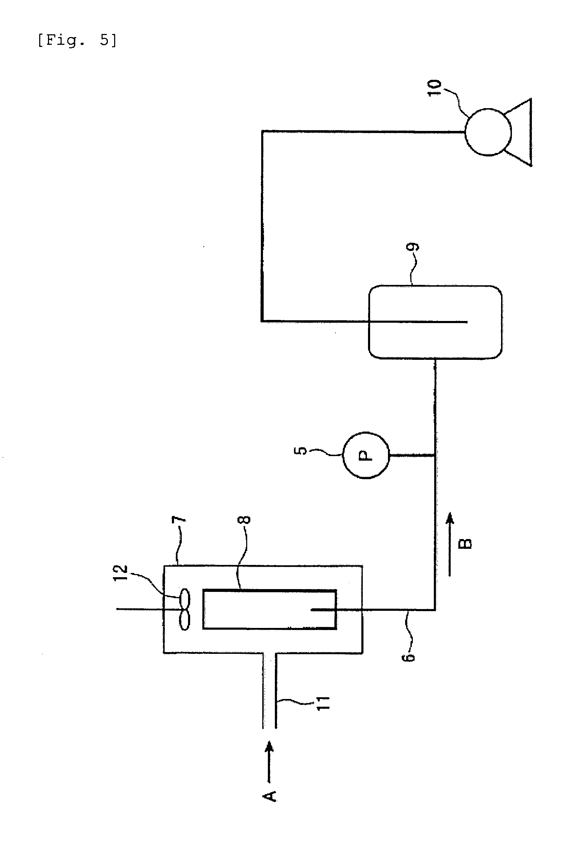

A pervaporation (PV) testing apparatus as shown in Fig. 5 was assembled so as to evaluate the obtained separation membrane (the separation membrane in which the zeolite membrane was formed on the surface of the porous substrate) for separation performance. The PV testing apparatus included: a container 7 provided with a pipe 11 through which a feed liquid A is fed and a stirrer 12; a separation apparatus 8 installed in the inside of the container 7; a pipe 6 connected to the open end of the separation apparatus 8; and a vacuum pump 10 connected to the end of the pipe 6 via a liquid nitrogen trap 9. The separation apparatus 8 was made up of the above mentioned separation membrane (in which the zeolite membrane was formed on the surface of the porous substrate). The pipe 6 was equipped with a vacuum gauge 5 at some midpoint thereof.

A feed liquid A (the mass ratio of ethanol/water= 90/10) at 75°C was fed to the container 7 of the PV testing apparatus through the pipe 11 and suction was applied to the inside of the separation apparatus 8 with the vacuum pump 10 (the vacuum degree by the vacuum gauge 5: 10 - 1000 Pa). The liquid B having permeated the separation membrane 52 was trapped with the liquid nitrogen trap 9. The compositions of the feed liquid A and the liquid B having permeated were measured by a gas chromatograph (GC-14B manufactured by Shimadzu Corporation), and the separation factor $\alpha$ and the flux Q which is the permeation rate of water were determined. As a result, it was found that the separation factor $\alpha$ was 30000, and the flux Q was 8.0 $kg/m^2 \cdot hr$.

(Example 2)

In the same manner for manufacturing the substrate as Example 1, substrates were prepared so that the nitrogen gas permeation rates thereof were adjusted to 200 $m^3/(m^2 \cdot hr \cdot atm)$, 250 $m^3/(m^2 \cdot hr \cdot atm)$, and 900 $m^3/(m^2 \cdot hr \cdot atm)$, respectively. Incidentally, the thicknesses of the individual primer tubes were 3 mm, 3 mm, and 1 mm, and porosities of the individual primer tubes were 30%, 35%, and 40%, respectively. Further, the foundation layers of the individual substrates were formed so as to possess the mean pore diameter of 0.8 $\mu$m, and the thickness of 30 $\mu$m. On the surface of the individual substrates prepared as above, respective zeolite membranes were formed in order to prepare the separation membranes.

To the obtained individual separation membranes, the feed liquid (the mass ratio of ethanol/water = 90/10) at 75°C was supplied in order to determine the flux Q

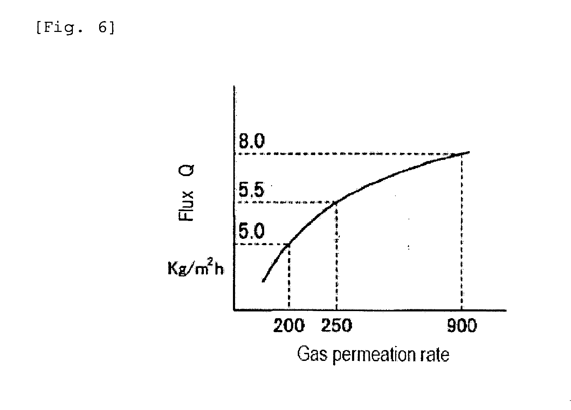

(kg/m$^2$·hr) as the water permeation rate. The obtained results are shown in Fig. 6.

According to Fig. 6, it was possible to confirm that the faster the nitrogen gas permeation rate of the separation membrane, the greater flux Q was obtained. Namely, when the nitrogen gas permeation rate was 200 m$^3$/ (m$^2$·hr·atm), the flux Q was 5.0 kg/m$^2$·hr; when the nitrogen gas permeation rate was 250 m$^3$/(m$^2$·hr·atm), the flux Q was 5.5 kg/m$^2$·hr; and when the nitrogen gas permeation rate was 900 m$^3$/(m$^2$·hr·atm), the flux Q was 8.0 kg/m$^2$·hr. Thus, it is preferable that the separation membrane has the nitrogen gas permeation rate of not less than 200 m$^3$/ (m$^2$·hr·atm), more particularly, not less than 400 m$^3$/ (m$^2$·hr·atm). Because, the higher the gas permeability of the separation membrane, the higher water permeation rate can be expected. It is preferable, however, that the nitrogen gas permeation rate is not more than 7000 m$^3$/(m$^2$·hr·atm) at fast, from the view point of maintaining the strength of the separation membrane. Incidentally, it was found that all of the samples show values exceeding 30000 as the separation factor $\alpha$, and which are preferable.

(Example 3)

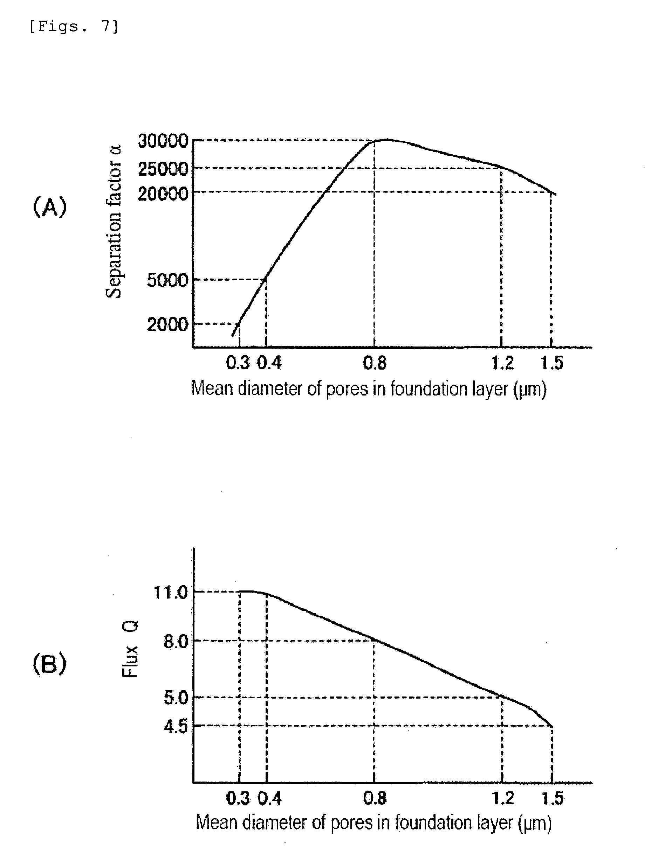

In the same manner for manufacturing the substrate as Example 1, substrates were prepared so that the mean pore diameters thereof were adjusted to 0.3 $\mu$m- 1.5 $\mu$m, respectively. Incidentally, the thicknesses of the individual primer tubes were 1 mm in common, and porosities of the individual primer tubes were 30% in common. Further, the foundation layers of the individual substrates were formed so as to possess the thickness of 30 $\mu$m. The mean pore diameters of the individual primer tubes were adjusted so that the nitrogen gas permeation rate of the substrates came to 900 m$^3$/(m$^2$·hr·atm). Then, on the surface of the individual substrates prepared as above, respective zeolite membranes were formed in order to prepare the separation membranes. The separation capabilities of the obtained separation membranes were evaluated by the PV testing apparatus as shown in Fig. 5 in the same manner as Example 1. The separation factor $\alpha$ and the flux Q were determined for the respective samples. The obtained results are shown in Figs. 7 (A), (B).

According to Fig. 7(A), the separation factor $\alpha$ was a good performance level of not less than 5000 when the mean pore diameter of the foundation layer was not less than 0.4 $\mu$m. Further, according to Fig. 7(B), the flux Q was a good performance level of 5.0 kg/m$^2$·hr when the mean pore diameter of the foundation layer was not more than 1.2 $\mu$m. From these results, it was found that the preferable range of the mean pore diameter of the foundation layer was from 0.4 $\mu$m to 1.2 $\mu$m.

(Example 4)

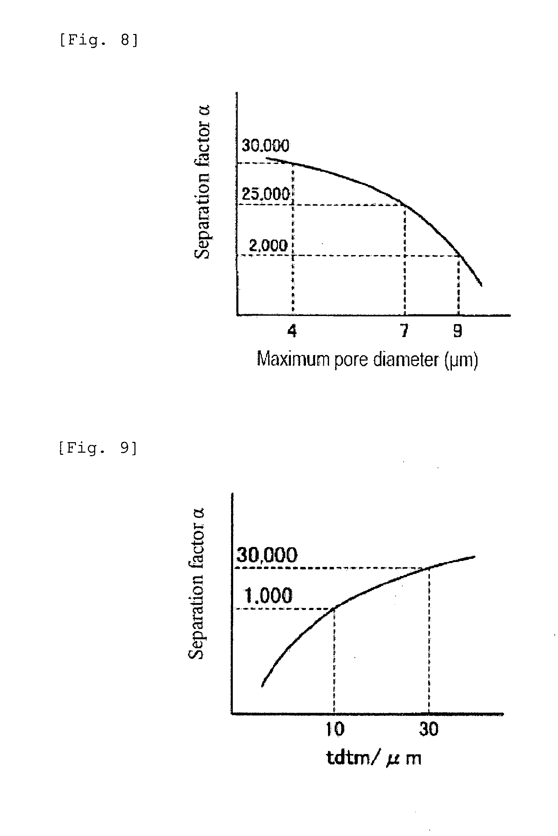

In the same manner for manufacturing the substrate as Example 1, substrates were prepared so that the maximum pore diameters thereof were adjusted to 4 $\mu$m, 7 $\mu$m, and 9 $\mu$m, respectively. Incidentally, the thicknesses of the individual primer tubes were 1 mm in common, and porosities of the individual primer tubes were 40% in common. Further, the foundation layers of the individual substrates were formed so as to possess the mean pore diameter of 0.8 $\mu$m, and the thickness of 30 $\mu$m. Then, on the surface of the individual substrates prepared as above, respective zeolite membranes were formed in order to prepare the separation membranes. The separation capabilities of the obtained separation membranes were evaluated by the PV testing apparatus as shown in Fig. 5 in the same manner as Example 1. The obtained results for the separation factor $\alpha$ are shown in Fig. 8.

According to Fig. 8, it was possible to confirm that the separation factor $\alpha$ reduced with increasing the maximum pore diameter of the porous substrate, i.e., in order of 4 $\mu$m, 7 $\mu$m, and 9 $\mu$m. Namely, when the maximum pore diameter of the porous substrate was 4 $\mu$m, the separation factor $\alpha$ was found to be 30000; when the maximum pore diameter was 7 $\mu$m, the separation factor $\alpha$ was found to be 25000; and when the maximum pore diameter was 9 $\mu$m, the separation factor $\alpha$ was found to be 2000. Therefore, it was found that the preferable range of the maximum pore diameter of the porous substrate was not more than 9 $\mu$m, and more particularly, not more than 7 $\mu$m.

(Example 5)

In the same manner for manufacturing the substrate as Example 1, substrates were prepared so that the thicknesses of the foundation layer of the individual substrates were adjusted to 10 $\mu$m, and 30$\mu$m, respectively. Incidentally, the thicknesses of the individual primer tubes were 1 mm in common, and porosities of the individual primer tubes were 40% in common. Further, the foundation layers of the individual substrates were formed so as to possess the mean pore diameter of 0.8 $\mu$m, and the thickness of 30 $\mu$m. On the surface of the individual substrates prepared as above, respective zeolite membranes were formed in order to prepare the separation membranes. The separation capabilities of the obtained separation membranes were evaluated by the PV testing apparatus as shown in Fig. 5 in the same manner as Example 1. The obtained results for the separation factor $\alpha$ are shown in Fig. 9.

According to Fig. 9, it was possible to confirm that the separation factor $\alpha$ reduced with decreasing the thickness of the foundation layer, i.e., in order of 30 $\mu$m, and 10 $\mu$m. Namely, when the thickness of the foundation layer was 30 $\mu$m, the separation factor $\alpha$ was found to be 30000; and when the thickness of the foundation layer was 10 $\mu$m, the separation factor $\alpha$ was found to be 1000. Therefore, it was found that the preferable range of the thickness of the foundation layer was not less than 10 μm, and more particularly, not less than 30 μm. It is considered that many defects will arise when the thickness of the foundation layer is less than 10 μm, and thus the separation factor becomes low. As the upper limit of the thickness of the foundation layer, it is preferable to be about 200 μm.

(Example 6)

In the same manner for manufacturing the substrate as Example 1, substrates were prepared so that the aspect ratios of alumina particles (the ratio of the major axis to the minor axis of particles) of the individual foundation layers were varied to 1.2, and 1.05, respectively. Incidentally, the thicknesses of the individual primer tubes were 1 mm in common, and porosities of the individual primer tubes were 40% in common. Further, the foundation layers of the individual substrates were formed so as to possess the mean pore diameter of 0.8 μm, and the thickness of 30 μm. On the surface of the individual substrates prepared as above, respective zeolite membranes were formed in order to prepare the separation membranes.

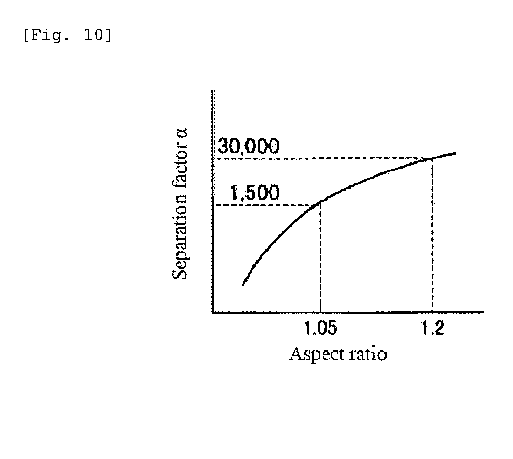

The separation capabilities of the obtained separation membranes were evaluated by the PV testing apparatus as shown in Fig. 5 in the same manner as Example 1. The obtained results for the separation factor α are shown in Fig. 10.

According to Fig. 10, it was possible to confirm that the separation factor α reduced with decreasing the aspect ratio of the particles of which the foundation layer of the porous substrate was comprised, i.e., in order of 1.2, and 1. 05. Namely, when the aspect ratio of the particles of which the foundation layer of the porous substrate was comprised was 1.2, the separation factor α was found to be 30000; and when the aspect ratio was 1.05, the separation factor α was found to be 1500. Therefore, it was found that the preferable range of the aspect ratio of the particles of which the foundation layer of the porous substrate was comprised was not less than 1.05, and more particularly, not less than 1.2

(Example 7)

In the same manner for manufacturing the substrate as Example 1, porous substrates were prepared so that the total contents of Ca and K in the individual porous substrates were adjusted to 0.1 mol%, 0.5 mol%, and 0.8 mol%, respectively. Incidentally, the mean pore diameters of the individual base layers were 7 μm, the porosities of the individual base layers were 40%, the mean pore diameters of the individual foundation layers were 0.8 μm, the thicknesses of the individual foundation layers were 30 μm, the thicknesses of the individual primer tubes were 1mm, and the porosities of the individual primer tubes were 40%. It was found that the nitrogen gas permeation rates of the substrates thus obtained were 900 $m^3/(m^2 \cdot hr \cdot atm)$ in common.

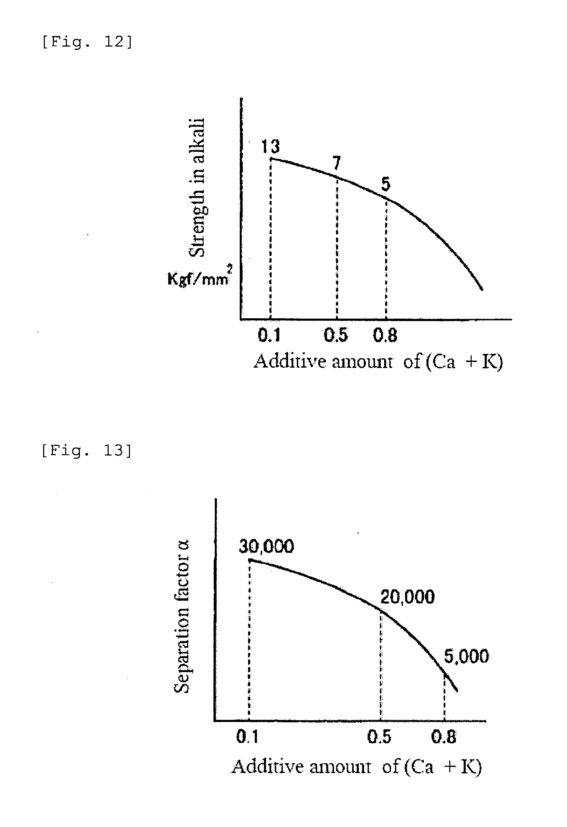

With respect to the individual porous substrate thus obtained, the strength in alkali at the hydrothermal synthesis was determined. The obtained results are shown in Fig. 12.

According to Fig. 12, it was possible to confirm that the alkali strength reduced with increasing the total content of Ca and K in the porous substrate, i.e., in order of 0.1 mol%, 0.5 mol%, and 0.8 mol%. Namely, when the total content of Ca and K was 0.1 mol%, the alkali strength was found to be 13 $kg/mm^2$; when the total content of Ca and K was 0.5 mol%, the alkali strength was found to be 7 $kg/mm^2$; and when the total content of Ca and K was 0.8 mol%, the alkali strength was found to be 5 $kg/mm^2$. This is because the strength of the porous substrate comes to weak owing to dissolution of Ca and K in the porous substrate when the porous substrate is processed to the hydrothermal reaction using a strong alkaline hydrothermal reaction solution. Therefore, it was found that the preferable range of the total content of Ca and K in the porous substrate was not more than 0.8 mol%, and more particularly, not more than 0.5 mol%.

Further, on the surface of the individual substrates prepared as above, respective zeolite membranes were formed in the same manner as Example 1 in order to prepare the separation membranes. The separation capabilities of the obtained separation membranes were evaluated by the PV testing apparatus as shown in Fig. 5 in the same manner as Example 1. The separation factor α and the flux Q ($kg/m^2 \cdot hr$) were determined. The obtained results are shown in Fig. 13.

According to Fig. 13, it was possible to confirm that the separation factor α reduced with increasing the total content of Ca and K in the porous substrate, i.e., in order of 0.1 mol%, 0.5 mol%, and 0.8 mol%. Namely, when the total content of Ca and K was 0.1 mol%, the separation factor α was found to be 30000; when the total content of Ca and K was 0.5 mol%, the separation factor α was found to be 20000; and when the total content of Ca and K was 0.8 mol%, the separation factor α was found to be 5000. Therefore, it was found that the preferable range of the total content of Ca and K in the porous substrate not more than 0.8 mol%, and more particularly, not more than 0.5 mol%.

(Control)

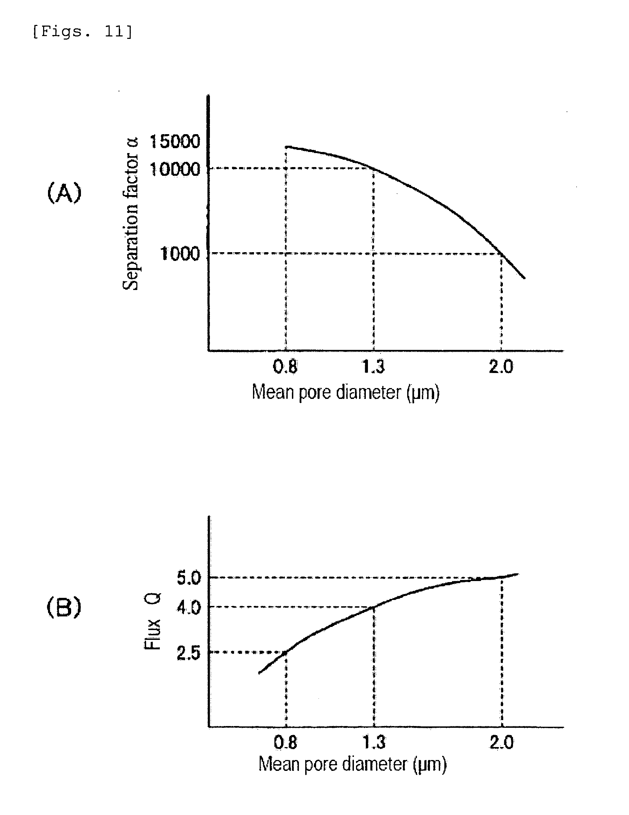

In the same manner for manufacturing the substrate as Example 1, a substrate were prepared, except that the primer tube was prepared so that the mean pore diameter thereof was 1.3 μm, the thickness thereof was 1mm, the porosity thereof was 40%, and the nitrogen gas permeation rates thereof was 400 $m^3/(m^2 \cdot hr \cdot atm)$. On the surface of the substrate thus obtained, zeolite membrane was formed in order to prepare the separation membrane. The obtained separation membrane was evaluated by the PV testing apparatus as shown in Fig. 5 in the same manner as Example 1. As the results, although the separation factor α was 10000 as a good data, the flux Q was 4.0 kg/m² h. In addition, some primer tubes of varying mean pore diameters were prepared, and then the respective zeolite membranes were formed on the individual primer tubes in order to evaluate the separation capability thereof. The obtained results are shown in Figs 11(A), (B).

With respect to the separation membranes which each were prepared using monolayered porous substrate, when decreasing the mean pore diameter of the primer tube, the separation factor α was improved as shown in Fig. 11 (A), the flux Q was decreased inversely. Therefore, the total improvement for the separation capability can be hardly expected. Meanwhile, when increasing the mean pore diameter of the primer tube, the improvement in the flux Q would be expected, but the decrement of the separation factor α would be caused remarkably. Therefore, the total improvement for the separation capability can be hardly expected.

It would be understood that the present invention is not limited to above mentioned examples, and, without deviating from the spirit of the present invention, various variations and modifications can be made on carrying out the present invention.

**Brief Description of the Drawings**

[Fig. 1] is a sectional view illustrating a part of the separation membrane in one embodiment of the present invention.

[Fig. 2] is a chart illustrating the procedure of manufacturing the primer tube as one embodiment of the base layer of the separation membrane.
[Fig. 3] is a chart illustrating the procedure of forming the foundation layer onto the outer surface of the primer tube.
[Fig. 4] is a chart illustrating the procedure of forming the zeolite membrane onto the surface of the foundation layer. [Fig. 5] is a block diagram of the pervaporation (PV) testing apparatus.
[Fig. 6] is a graph showing the relation between the nitrogen gas permeation rate and the flux Q which is a water permeation rate.
[Figs. 7] (A) is a graph showing the relation between the mean pore diameter of the foundation layer and the separation factor α; and (B) is a graph showing the relation between the mean pore diameter of the foundation layer and the flux Q.
[Fig. 8] is a graph showing the relation between the maximum pore diameter of the porous substrate and the separation factor of the separation membrane.
[Fig. 9] is a graph showing the relation between the thickness of the foundation layer in the porous substrate and the separation factor of the separation membrane.
[Fig. 10] is a graph showing the relation between the aspect ratio of the powder (particles) of which the foundation layer in the porous substrate is comprised and the separation factor of the separation membrane.
[Figs.11] (A) is a graph showing the relation between the mean pore diameter of the foundation layer and the separation factor α in Control; and (B) is a graph showing the relation between the mean pore diameter of the foundation layer and the flux Q in Control.
[Fig. 12] is a graph showing measurement results for strengths in alkali of the respective samples at the hydrothermal synthesis.
[Fig 13] is a graph showing the total content of Ca and K, and the separation factor α.

**Explanation of numerals**

| 1 | Primer tube |
|---|---|
| 2 | Foundation layer |
| 3 | Porous substrate |
| 4 | Zeolite membrane |
| 5 | Vacuum gage |
| 6 | Pipe |
| 7 | Container |
| 8 | Separation apparatus |
| 9 | Liquid nitrogen trap |
| 10 | Vacuum pump |
| 11 | Pipe |
| 12 | Stirrer |

**Claims**

1. Separation membrane comprises
   a porous substrate which is made of ceramic sintered body of which a main ingredient is alumina, and
   a zeolite membrane which is formed over the surface of the porous substrate,
   wherein the porous substrate comprises a base layer and a foundation layer which is formed on the base layer and is formed for the zeolite membrane, and
   wherein the separation membrane is **characterized in that** a mean pore diameter of the foundation layer is smaller than a mean pore diameter of the base layer.

2. Separation membrane according to Claim 1, wherein a nitrogen gas permeation rate through the porous substrate is in the range of 200 - 7000 $m^3/(m^2 \cdot hr \cdot atm)$.

3. Separation membrane according to Claim 2, wherein the nitrogen gas permeation rate is in the range of 400 - 7000 $m^3/(m^2 \cdot hr \cdot atm)$.

4. Separation membrane according to one of Claims 1 to 3, wherein the mean pore diameter of the base layer is in the range of 4 - 12 μm, and the mean pore diameter of the foundation layer is in the range of 0.4 - 1.2 μm.

5.  Separation membrane according to one of Claims 1 to 4, wherein thickness of the base layer is in the range of 1 - 3 mm.

6.  Separation membrane according to one of Claims 1 to 5, wherein thickness of the foundation layer is in the range of 10 - 200 μm.

7.  Separation membrane according to one of Claims 1 to 6, wherein aspect ratio of particles of which the foundation layer is comprised is not less than 1.05.

8.  Separation membrane according to Claim 7, wherein the aspect ratio of particles of which the foundation layer is comprised is not less than 1.2.

9.  Separation membrane according to one of Claims 1 to 8, wherein porosity of the porous substrate is in the range of 20 - 50%.

10. Separation membrane according to Claim 9, wherein the porosity of the porous substrate is in the range of 35 - 40 %.

11. Separation membrane according to one of Claims 1 to 10, wherein the porous substrate has a maximum pore diameter of not more than 9 μm, the maximum pore diameter being determined by the bubble point method using water.

12. Separation membrane according to one of Claims 1 to 10, wherein the porous substrate has a maximum pore diameter of not more than 7 μm, the maximum pore diameter being determined by the bubble point method using water.

13. Separation membrane according to one of Claims 1 to 12, wherein a total content of Ca and K included in the porous substrate is not more than 0.8 mol%.

14. Separation membrane according to one of Claims 1 to 12, wherein the total content of Ca and K is not more than 0.5 mol%.

[Fig. 1]

[Fig. 2]

[Fig. 3]

[Fig. 4]

[Fig. 5]

[Fig. 6]

[Figs. 7]

(A)

(B)

[Fig. 8]

[Fig. 9]

[Fig. 10]

[Figs. 11]

(A)

(B)

[Fig. 12]

[Fig. 13]

<table>
<tr><td colspan="2">**INTERNATIONAL SEARCH REPORT**</td><td colspan="2">International application No.<br>PCT/JP2005/004514</td></tr>
</table>

| A. CLASSIFICATION OF SUBJECT MATTER |
|---|
| Int.Cl$^7$ B01D71/02, 53/22, C04B35/10, 38/00, 41/85 |
| According to International Patent Classification (IPC) or to both national classification and IPC |

| B. FIELDS SEARCHED |
|---|
| Minimum documentation searched (classification system followed by classification symbols)<br>Int.Cl$^7$ B01D71/02, 53/22, C04B35/10, 38/00, 41/85 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
WPIL(QWEB)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2003-071258 A (Toshiba Ceramics Co., Ltd.),<br>11 March, 2003 (11.03.03),<br>Claims; Par. Nos. [0005], [0013] to [0016],<br>[0044]<br>(Family: none) | 1-6,9-12 |
| Y | JP 2001-062265 A (Kyocera Corp.),<br>13 March, 2001 (13.03.01),<br>Par. Nos. [0029], [0042] to [0044]<br>(Family: none) | 1-6,9-12 |
| A | JP 2003-068629 A (Kyocera Corp.),<br>07 March, 2003 (07.03.03),<br>Claims; Par. Nos. [0043] to [0052]<br>(Family: none) | 1-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>09 June, 2005 (09.06.05) | Date of mailing of the international search report<br>28 June, 2005 (28.06.05) |
|---|---|
| Name and mailing address of the ISA/<br>Japanese Patent Office | Authorized officer |
| Facsimile No. | Telephone No. |

Form PCT/ISA/210 (second sheet) (January 2004)

23

| | | |
|---|---|---|
| **INTERNATIONAL SEARCH REPORT** | International application No. | |
| | PCT/JP2005/004514 | |

| C (Continuation).  DOCUMENTS CONSIDERED TO BE RELEVANT | | |
|---|---|---|
| Category* | Citation of document, with indication, where appropriate, of the relevant passages | Relevant to claim No. |
| A | JP 2002-292261 A  (Kyocera Corp.),<br>08 October, 2002 (08.10.02),<br>Claims; Par. Nos. [0047] to [0050]<br>(Family: none) | 1-14 |
| A | JP 2002-293656 A  (Kyocera Corp.),<br>09 October, 2002 (09.10.02),<br>Claims; Par. Nos. [0023] to [0026]<br>(Family: none) | 1-14 |
| A | JP 63-291809 A  (Idemitsu Kosan Co., Ltd.),<br>29 November, 1988 (29.11.88),<br>Claims; page 2, lower left column, line 19 to<br>lower right column, line 13<br>(Family: none) | 1-14 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP HEI71995185275 A